(19) Europäisches Patentamt
European Patent Office
Office européen des brevets

(11) Veröffentlichungsnummer: **0 272 428 B1**

(12) **EUROPÄISCHE PATENTSCHRIFT**

(45) Veröffentlichungstag der Patentschrift: **15.01.92**

(51) Int. Cl.$^5$: **G02F 1/17**

(21) Anmeldenummer: **87116465.3**

(22) Anmeldetag: **07.11.87**

# (54) Steuerbare Scheibe.

(30) Priorität: **20.12.86 DE 3643690**

(43) Veröffentlichungstag der Anmeldung:
**29.06.88 Patentblatt 88/26**

(45) Bekanntmachung des Hinweises auf die Patenterteilung:
**15.01.92 Patentblatt 92/03**

(84) Benannte Vertragsstaaten:
**DE FR GB**

(56) Entgegenhaltungen:
**EP-A- 0 027 855**
**DE-A- 3 115 894**
**US-A- 4 338 000**
**US-A- 4 361 385**
**US-A- 4 550 982**
**US-A- 4 586 792**
**US-A- 4 613 211**

(73) Patentinhaber: **DORNIER GMBH**
**Postfach 1420**
**W-7990 Friedrichshafen 1(DE)**

(72) Erfinder: **Scherber, Werner, Dr. Dipl.-Phys.**
**Unterer Höhenweg 22**
**W-7775 Bermatingen(DE)**
Erfinder: **Meisel, Thomas, Dr. Dipl.-Ing.**
**Breite 2**
**W-7758 Meersburg(DE)**

(74) Vertreter: **Landsmann, Ralf, Dipl.-Ing.**
**c/o DORNIER GMBH Postfach 1420**
**W-7990 Friedrichshafen 1(DE)**

EP 0 272 428 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Scheibe oder eine Folie mit steuerbarer Lichtdurchlässigkeit.

Scheiben von Fahrzeugen können bisher nicht in ihrer Transparenz geregelt werden. Phototrope Gläser finden bisher nur als Brillengläser Verwendung und weisen nur eine relativ geringe Änderung der Transmission auf. Scheiben an Gebäuden werden bisher mit Vorhängen, Fensterläden, Rolläden oder anderen beweglichen mechanischen Elementen verdunkelt.

Aufgabe der Erfindung ist es, eine Scheibe oder eine Folie vorzuschlagen, deren Lichtdurchlässigkeit ohne mechanische bewegliche Elemente steuerbar ist.

Diese Aufgabe wird erfindungsgemäss gelöst von Scheiben oder Folien mit den in den Ansprüchen genannten Merkmalen.

Die Erfindung benutzt elektro-optische Schichtsysteme auf der Basis leitfähiger Polymere, welche aufgrund ihrer guten chemischen Beständigkeit, ihrer Zyklenfestigkeit und der klaren Durchsichtigkeit geeignet sind. Der Steuermechanismus beruht auf der reversiblen elektrochemischen Dotierung von bestimmten Polymersubstanzen, was sich in kräftigen Farbänderungen beispielsweise von farblos zu gelb, grün, blau und schwarz äussert. Die Polymerschicht befindet sich zusammen mit einem festen, flüssigen oder halbflüssigen Elektrolyten zwischen zwei transparenten Elektroden und wird mit definierten Spannungen angesteuert.

Da der Farbumschlag von einer starken Änderung der elektrischen Leitfähigkeit der Zelle begleitet wird, kann der aktuelle Schaltzustand für Redundanz- und Regelzwecke leicht elektronisch kontrolliert werden. Bevorzugt bilden das aktive Element (die Polymerschicht) und die Verglasung oder die Trägerfolie eine Einheit, so dass die Geometrie (Form, Wölbung, Steifheit, Biegsamkeit) des Trägers frei wählbar ist.

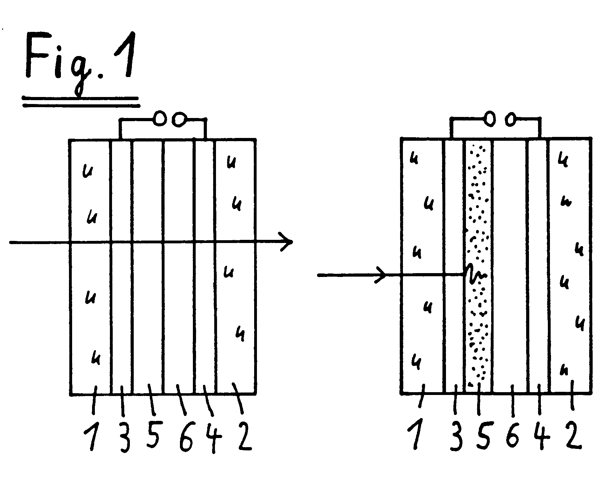

Das Prinzip der Erfindung wird anhand der Figuren 1 und 2 näher erläutert.

Figur 1 zeigt eine Ausführung mit zwei Trägern 1 und 2 - hier zwei Glasscheiben. Die beiden Träger 1 und 2 sind auf ihren gegeneinander zugewandten Seiten mit transparenten Halbleiterelektroden 3 und 4 beschichtet, die als Kontakte dienen. Auf die Elektrode 3 ist die aktive Polymerschicht 5 aufgebracht. Die beiden Träger 1 und 2 sind mit dem hochtransparenten Elektrolyten 6 verkittet.

Das System kann im potentialfreien Zustand transparent oder dunkel (absorbierend, gepunktet gezeichnet) eingestellt werden. Der farbbestimmende Oxidationszustand des leitfähigen Polymers 5 wird über den pH-Wert des (gepufferten) Polymerelektrolyten 6 definiert.

Durch ein geeignetes Potential unterhalb der Zersetzungsspannung des Elektrolyten wird das leitfähige Polymer 5 z.B. mit Protonen reduziert oder, durch Potentialumkehr, unter Protonenabgabe oxidiert. Die Folge ist eine Entfärbung bzw. Verfärbung des Polymers 5. Solange ein Haltepotential an dem System anliegt (Elektroden 3 und 4) bleibt die jeweilige Tönung erhalten. Der Stromverbrauch ist in diesem Zustand äusserst gering. Fällt das Potential ab, kehrt das System in seinen Ausgangszustand zurück. Durch Potentialumkehr kann dieser Vorgang beschleunigt werden.

Figur 2 zeigt eine weitere Ausführungsform. Der Aufbau entspricht der Figur 1, jedoch ist eine weitere Schicht (7) vorgesehen. Durch einen geeigneten transparenten Protonenspeicher an der Elektrode 4 des Systems ist eine potentialfreie Speicherung des jeweiligen Tönungszustandes des leitfähigen Polymers 5 zu erreichen.

Die zur Steuerung notwendigen Protonen werden in der Form von Adsorbat oder Hydriden in einer dünnen transparenten Metall- oder Halbleiterschicht gespeichert.

Die Tönungsreaktion ist bei den leitfähigen Polyanilinen und deren Derivaten mit einer Oxidation und Protonenabgabe der Aminogruppe verbunden:

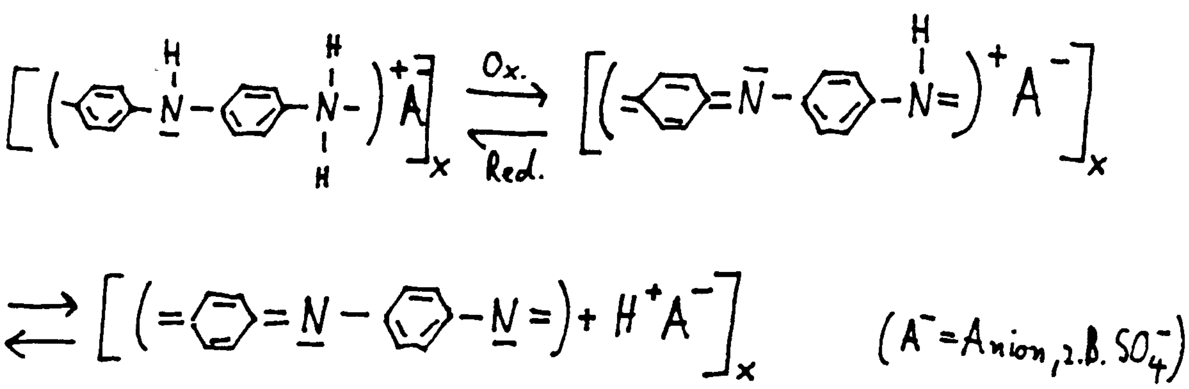

Die Farbe des Polyanilins wechselt so von grün bzw. gelb (je nach Elektrolyt und pH) bei 0 V ins dunkelblaue bei +0,4 V und ins schwarze bei + 0,8 V. Bei negativen Potentialen (Reduktion, Protonenaufnahme) wird das Polymer ab ca. -0,2 V völlig transparent. Derivate des Polyanilins verhalten sich ähnlich, jedoch sind die Sättigungsfarben der oxidierten Substanz purpur, violett oder dunkelgrün. Wird das System oberhalb der Zersetzungsspannung des Elektrolyten betrieben, entsteht an der negativ geschalteten Gegenelektrode Wasserstoff. Für polymere Sulfonsäure mit definiertem $H_2O$-Gehalt gilt folgende Bruttogleichung:

$$H_2 + 2H_2O \underset{\text{Kathode}}{\overset{\text{Anode}}{\rightleftharpoons}} 2\ H_3O^+ + 2e^-$$

Der Wasserstoff kann in der Elektrode durch Adsorption oder Hydridbildung gebunden werden, so dass keine Gasentwicklung eintritt. Die Elektrode gibt bei Polungsumkehr den Wasserstoff wieder ab. Geeignete Elektrodenmaterialien sind Pd, Pt, Rh, Ti in dünner transparenter Form. Auch halbleitende transparente $In_2O_3$: $SnO_2$ (ITO) Elektroden speichern im gewissen Umfang Wasserstoff:

$$Me + H_2 \rightleftharpoons Me\ (H_{2ad}) \qquad \text{oder}$$

$$2\ Me + H_2 \rightleftharpoons 2\ Me\ (H)$$

Geeignete leitfähige Polymere sind z.B. Polyanilin, Poly-o-Phenyldiamin, Poly-Anilin-3-Sulfonsäure Polypyrrol und Polythiophen.

Das Polymer wird durch anodische Oxidation des Monomers aus einem sauren Elektrolyten hergestellt. Dabei entsteht auf entsteht auf der Elektrode ein unlöslicher, in Säuren und Laugen beständiger Film leitfähigen Polymers. Durch geeignete Wahl der Leitsalze (= Anion des Polymers) in der Polymerisationslösung kann die Farbgebung des Polymers beeinflusst werden.

Geeignete Materialien und bevorzugte Schichtdicken sind Gegenstände von Unteransprüchen, wobei zu beachten ist, dass die Dicken aller Schichten ausser der Polymerschicht unkritisch sind. Die Schichten können also auch wesentlich dicker sein als im Anspruch angegeben ist.

Im nachfolgenden werden verschiedene Anwendungsgebiete angegeben:

Fahrzeugverglasung

Das erfindungsgemässe System eignet sich als Sonnen- oder Blendschutz in Kraftfahrzeugen. Front-, Seiten- und Heckverglasung oder Glasdächer können einbezogen werden. Durch die automatische Rückkehr in den transparenten Zustand bei fehlendem elektrischen Potential ist ein wichtiger Sicherheitsaspekt für den Einsatz im Automobil gegeben. Bei Ausfall der elektrischen Einspeisung ergibt sich keine unvermutete Sichtbehinderung für den Fahrer. Zusätzliche Sicherheit kann durch eine Teilabdunklung der Windschutzscheibe erreicht werden, indem beispielsweise nur der obere Bereich der Scheibe angesteuert wird (Sonnenblende). Der Grad der Abdunkelung kann zonenweise und stufenlos an die Bedürfnisse des Fahrers an den Sonnenstand und an die aktuelle Fahrsituation angepasst werden. Die Integration in ein rechnergesteuertes Kontrollsystem ist möglich. Eine Kombination von aktivem Element mit einer Verbundglaseinheit ist in den Figuren 1 und 2 gezeigt.

Die Durchlässigkeit der Scheiben kann von Hand oder automatisch gesteuert sein, was zu einem wirksamen Blendschutz bei Nachtfahrten, automatischer Anpassung des Helligkeitspegels bei Ein- und Ausfahrten von Tunnels und Parkhäusern und zum Schutz gegen Einbruch und Diebstahl des geparkten Fahrzeugs durch Verhinderung des Einblicks ins Wageninnere genutzt werden kann. Eine übermässige Erwärmung des Innenraums im Sommer, insbesondere bei geparktem Fahrzeug, kann verhindert werden.

Gebäudeverglasung

In Gebäuden eignet sich das erfindungsgemässe System zur Abdunklung von Wohnräumen, Arbeitsräumen oder Gewächshäusern als steuerbarer Sonnenschutz sowie als Sichtschutz. Zum Schutz vor Einbrüchen können Verglasungen von Bankschaltern oder Schaufenster auf Knopfdruck verdunkelt werden. Glastüren können bei Annäherung von Personen automatisch sichtbar gemacht werden, um Verletzungen zu vermeiden. Durch die Möglichkeit, nahezu alle Farbtöne zu erzeugen, ist auch eine gestalterische Einbeziehung der Verglasung in die Fassade eines Gebäudes möglich. Der Energieverbrauch für die grossflächige Steuerung der Fenstertransparenz ist gering, insbesondere wenn ein speicherndes System verwendet wird, das nur in der Umschaltphase Energie verbraucht. Der typische Leistungsbedarf für einen Schaltvorgang liegt bei ca. 0,3 $Wh/m^2$.

Solarenergienutzung

Figur 3 zeigt eine Anwendung, bei der die Absorption der Sonneneinstrahlung zur Regulierung des Wärmehaushaltes von Gebäudeaussenflächen benutzt wird. Zwischen einer wärmeisolierenden Isolierglasabdeckung 10 und dem Mauerwerk 12 befindet sich ein erfindungsgemässes schaltbares Element 14. Im transparenten Zustand (obere Hälfte) wird Sonnenlicht vom zweckmäßigerweise weißen Mauerwerk 12 diffus reflektiert (Pfeile), dadurch wird ein nur geringer Teil des sichtbaren Lichts in Wärme transformiert. Nach dem Umschalten in den absorbierenden Zustand (untere Hälfte) des aktiven Elements 14, wird das Sonnenlicht zum grossen Teil in Wärme umgewandelt, die durch Strahlung, Konvektion und/oder direkten Kontakt mit dem Mauerwerk dem Gebäude zugeführt wird. Die Isolierglasscheibe 10 - günstiger im Preis, aber schlechter im Wirkungsgrad ist eine Einfachverglasung - verhindert eine Abgabe der Wärme als Infrarotstrahlung oder durch Wärmeleitung in die Umgebung. Statt dem Mauerwerk können auch andere Speichermedien z.B. Wassertanks, Wärmetauscherflächen , Solarkollektoren etc. eingesetzt werden.

Anzeigeelemente

Durch die farblich attraktive Gestaltungsmöglichkeit sowie die grossflächige Darstellung beliebiger Konturen (durch bekannte Strukturtechniken der Elektroden 3, 4) ist ein für die Werbung interessantes Medium verfügbar. Dekorative und informative Effekte sind möglich.
Neben der Möglichkeit, das System zwischen Glasscheiben anzuordnen besteht die Alternative zwei oder auch nur eine transparente Kunststoffolie als Träger zu verwenden. Dadurch werden plakatähnliche Werbemittel mit veränderbarer Information realisierbar.
Die Erfindung kann für kleine Anzeigeelemente wie Zifferblätter von Uhren oder Meßinstrumenten, Displays von Rechnern oder Bildschirmen und für grosse Anzeigeelemente wie Verkehrsschilder, Litfassäulen, Anzeigen auf Bahnhöfen oder Flugplätzen verwendet werden. Die Verwendung ist überall dort möglich, wo Schaltzeiten im sec-Bereich akzeptabel sind.

**Optik**

In der Optik ist die Verwendung für Brillengläser oder Gläser, Linsen oder Filter anderer optischer Geräte möglich.

**Patentansprüche**

**1.** Scheibe oder Folie mit steuerbarer Lichtdurchlässigkeit, mit folgendem schichtförmigen Aufbau,
- mindestens einem Träger (**1,2**),
- zwei übereinander auf dem Träger angeordneten transparenten Elektroden (**3,4**),
- einer aktiven Polymerschicht (**5**) zwischen den Elektroden (**3,4**), deren Absorptionsvermögen im sichtbaren Wellenlängenbereich durch eine reversible elektrochemische Dotierung verändert werden kann, und
- einem transparenten Elektrolyten (**6**) zwischen den Elektroden (**3,4**),

**dadurch gekennzeichnet,** dass zwischen dem Elektrolyten (**6**) und der einen transparenten Elektrode (**4**) eine zusätzliche Schicht (**7**) aus transparentem Polyanilin vorgesehen ist, die die zur elektrochemischen Dotierung der Polymerschicht (**5**) notwendigen Ionen nach Bedarf speichert und abgibt.

**2.** Scheibe oder Folie nach Anspruch 1, **gekennzeichnet durch** die Verwendung folgender Materialien:
- Elektroden (**3,4**): $In_2O_3$: $SnO_2$ ( = ITO), $SnO_2$, $In_2O_3$, Mo, Pt, Pd, Rh, Ti, ZnSe
- Polymerschicht (**5**): Polyanilin, Polyanilin 3-Sulfonsäure, Poly-o-Phenyldiamin, Polypyrrol, Polythiophen

- Elektrolyt (**6**): polymere Sulfonsäuren, polymere Carbonsäuren, $H_2SO_4$ gepuffert, HCl, $H_2ClO_4$ gepuffert.

**3.** Verwendung der Scheibe oder Folie nach Anspruch 1 oder 2 als Fahrzeugverglasung.

**4.** Verwendung der Scheibe oder Folie nach Anspruch 1 oder 2 als Gebäudeverglasung.

**5.** Verwendung der Scheibe oder Folie nach Anspruch 1 oder 2 als optische Komponenten der passiven Solarenergienutzung.

**6.** Verwendung der Scheibe oder Folie nach Anspruch 1 oder 2 als Anzeige- oder Bildelement.

**7.** Verwendung der Scheibe oder Folie nach Anspruch 1 oder 2 als Brillenglas oder als optisches Element in anderen optischen Instrumenten.

**Claims**

**1.** Pane or foil with controllable light permeability with a construction in layers as follows:

- at least one carrier (1, 2),
- two transparent electrodes (3, 4) which are disposed on the carrier on top of one another,
- one active polymer layer (5) between the electrodes (3, 4), the absorption capacity of which can be changed in the visible wavelength range by a reversible electrochemical doping, and
- one transparent electrolyte (6) between the electrodes (3, 4), characterised in that between the electrolyte (6) and one transparent electrode (4) an additional layer (7) of transparent polyaniline is provided which stores and emits the ions necessary for the electrochemical doping of the polymer layer (5) according to requirements.

**2.** Pane or foil according to claim 1, characterised by the use of the following materials:

electrodes (3, 4): $In_2O_3$:$SnO_2$(=ITO),$SnO_2$,$In_2O_3$, Mo, Pt, Pd, Rh, Ti, ZnSe

polymer layer (5): polyaniline, polyaniline 3-sulphonic acid, poly-o-phenyldiamine, polypyrrole, polythiophene

electrolyte (6): polymer sulphonic acids, polymer carbonic acids, buffered $H_2SO_4$, buffered HCl,$H_2ClO_4$.

**3.** The use of the pane or foil according to claim 1 or 2 as vehicle glazing.

**4.** The use of the pane or foil according to claim 1 or 2 as building glazing.

**5.** The use of the pane or foil according to claim 1 or 2 as optical components of the passive utilization of solar energy.

**6.** The use of the pane or foil according to claim 1 or 2 as indicating or image element.

**7.** The use of the pane or foil according to claim 1 or 2 as glasses for spectacles or as optical element in other optical instruments.

**Revendications**

**1.** Plaque ou feuille à transparence réglable présentant la structure stratiforme suivante :

- au moins un support (1, 2),
- deux électrodes transparentes (3, 4) disposées l'une au-dessus de l'autre sur le support,
- une couche de polymère active (5) entre les électrodes (3, 4), dont le pouvoir absorbant dans la plage des longueurs d'ondes visibles peut être modifié par un dopage électrochimique réversible, et
- un électrolyte transparent (6) entre les électrodes (3, 4),

**caractérisée en ce** qu'entre l'électrolyte (6) et l'une des électrodes transparentes (4) est prévue une couche supplémentaire (7) de polyaniline transparente qui emmagasine et délivre selon les besoins les ions nécessaires pour le dopage électrochimique de la couche de polymère (5).

**2.** Plaque ou feuille selon la revendication 1, caractérisée par la mise en oeuvre des matériaux suivants :

| | |
|---|---|
| - Electrodes (3, 4) : | $In_2O_3$ : $SnO_2$ (=ITO), $SnO_2$, $In_2O_3$, Mo, Pt, Pd, Rh, Ti, ZnSe |
| - Couche de polymère (5) : | Polyaniline, acide polyaniline-3-sulfonique, poly-o-phényldiamine, polypyrrole, polythiophène |
| - Electrolyte (6) : | Acides sulfoniques polymères, acides carboxyliques polymères, $H_2SO_4$ tamponné, HCl, $H_2ClO_4$ tamponné. |

**3.** Utilisation de la plaque ou feuille selon l'une des revendications 1 ou 2 comme vitrage de véhicules.

**4.** Utilisation de la plaque ou feuille selon l'une des revendications 1 ou 2 comme vitrage d'immeubles.

**5.** Utilisation de la plaque ou feuille selon l'une des revendications 1 ou 2 comme composants optiques de l'exploitation passive de l'énergie solaire.

**6.** Utilisation de la plaque ou feuille selon l'une des revendications 1 ou 2 comme élément d'affichage ou d'image.

**7.** Utilisation de la plaque ou feuille selon l'une des revendications 1 ou 2 comme verre de lunettes ou comme élément optique dans d'autres instruments optiques.

Fig. 2

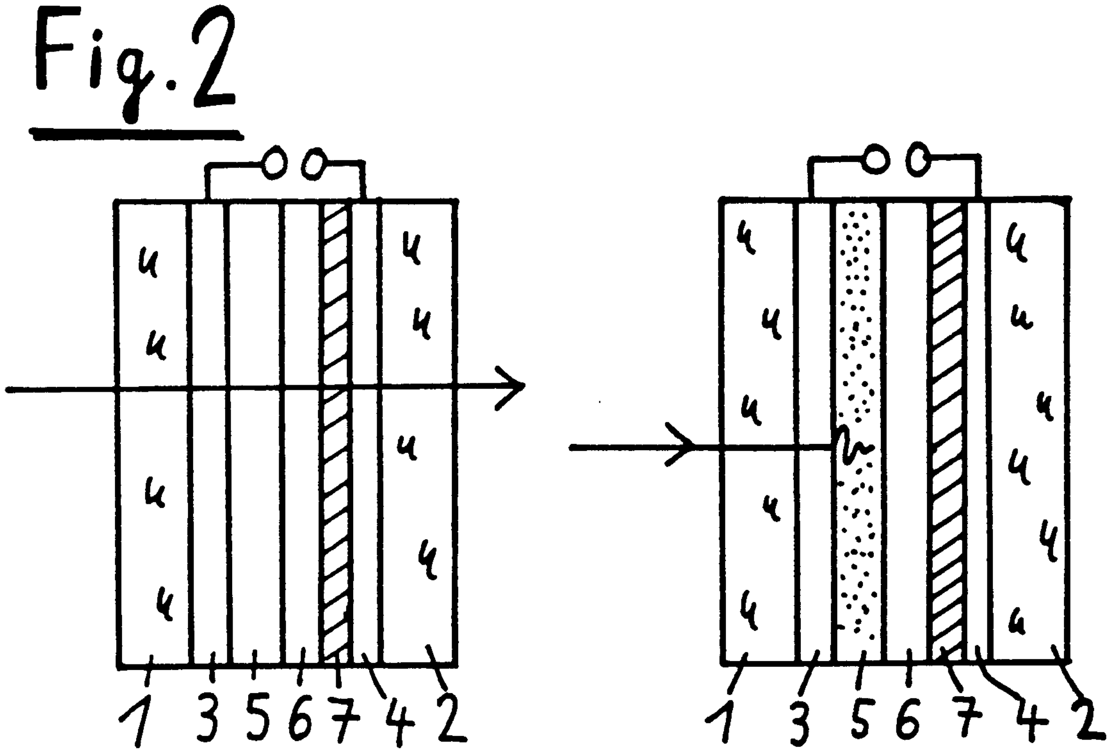


Fig. 3

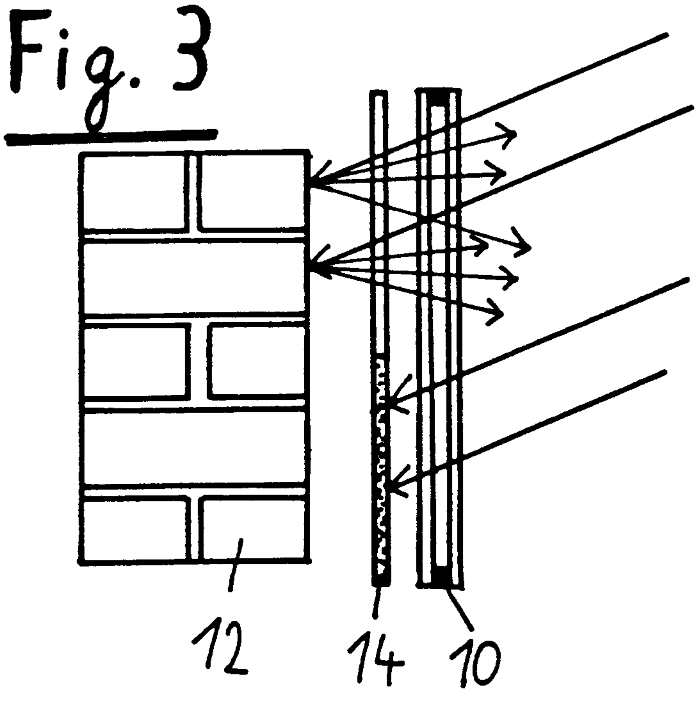

Fig. 1